# EUROPÄISCHE PATENTSCHRIFT

(11) **EP 1 935 212 B1**
(45) Veröffentlichungstag und Bekanntmachung des Hinweises auf die Patenterteilung: **09.12.2009**
(21) Anmeldenummer: 06806122.5
(22) Anmeldetag: 09.10.2006
(51) Int. Cl.: H05B 6/06, A47J 36/02

(54) **GN-BEHÄLTER**
GN CONTAINER
RECIPIENT GASTRONORME

(30) Priorität: 10.10.2005 DE 102005048406
(43) Veröffentlichungstag der Anmeldung: 25.06.2008
(73) Patentinhaber: Eisfink Max Maier GmbH & Co. KG, 71636 LUDWIGSBURG (DE)
(72) Erfinder: MAIER, Max, 71636 Ludwigsburg (DE)
(74) Vertreter: Menges, Rolf
(86) Internationale Anmeldenummer: PCT/EP2006/009743
(87) Internationale Veröffentlichungsnummer: WO 2007/042247

(56) Entgegenhaltungen:
- EP-A- 0 192 333
- EP-A- 1 591 049
- WO-A-01/19141
- WO-A2-99/41950
- DE-A1- 19 540 408
- US-A1- 2003 094 450
- US-A1- 2004 149 736

## Beschreibung

Die Erfindung betrifft einen GN (Gastronorm)-Behälter nach dem Oberbegriff des Patentanspruchs 1.

Kochgeschirre, d. h. Behälter, die zur Aufnahme von zu garenden Speisen eingesetzt werden, sind auf verschiedenerlei Weise beheizbar, beispielsweise durch Kontaktwärme, Strahlungswärme oder induktive Erwärmung.

Eine Beheizung durch Kontaktwärme erfolgt beispielsweise bei einem Topf, der auf eine Heizplatte gestellt wird. Diese Erwärmungsart ist seit Jahren auf dem Rückzug, weil sie Kochplatten und Elektroböden an den Kochgeschirren erfordert, die völlig plan sind.

Bei der Strahlungserwärmung oder bei der induktiven Erwärmung braucht der Boden des Kochgeschirrs nicht plan zu sein. Die Erwärmung erfolgt durch Strahlung durch ein Kochfeld hindurch, das z.B. ein Ceran-Feld sein kann. Bei der induktiven Erwärmung muss das Kochgeschirr aus induktionsfähigem Material bestehen. Induktionsfähige Kochgeschirre bestehen gewöhnlich insgesamt, also nicht nur am Boden aus induktionsfähigem Material, das heißt aus einem Mehrschichtmaterial aus mehreren aufeinander befestigten Schichten und müssen vor dem Einsatz geeicht werden. Sie werden durch eine entsprechende Eichzahl gekennzeichnet, nach welcher der Koch den Induktionsherd einstellt. Die Eichzaht entspricht einer bestimmten Einstellung des Induktionsherdes, bei der dieser bei dem betreffenden Kochgeschirr eine bestimmte Nennleistung aufnimmt. Die Erwärmung wird dann gemäß der Eichzahl gesteuert, z.B. so, dass der Induktionsherd bei der Erwärmung des Kochgeschirrs einen bestimmten Nennstrom aufnimmt, der konstant gehalten wird.

Ein induktionsfähiges Kochgeschirr, das insgesamt, also nicht nur am Boden aus induktionsfähigem Material besteht, ist beispielsweise aus der US-A-5,952,112 bekannt. Es handelt sich um einen durch Tiefziehen herstellbaren Mehrschichtbehälter aus kalt verformbarem Verbund- oder Mehrschichtmaterial. Dieses Material umfasst eine Kernschicht aus einer Aluminiumlegierung, die zwischen zwei äußeren Schichtteilen angeordnet ist. Ein solcher äußerer Schichtteil umfasst eine Schicht aus reinem Aluminium, die auf der Kernschicht angeordnet ist, gefolgt von einer Schicht aus Kohlenstoffstahl und schließlich einer Schicht aus einem austenitischen Stahl, die die äußerste Schicht bildet. Ein so aufgebautes Kochgeschirr soll eine gute Wärmeleitfähigkeit haben und leicht magnetisierbar sein. Die Anordnung der einzelnen Schichten ist so gewählt, dass sie nicht zu Schwierigkeiten führt wie zum Beispiel dem Ablösen von Schichten, der Unterbrechung von Schichten oder der Ausbildung von Wellen während der Kaltverformung, des Tiefziehens usw. Diese US-Druckschrift befasst sich nicht mit der Ausbildung des bekannten Behälters als GN-Behälter oder mit dem Einsatz des bekannten Behälters bei einer temperaturabhängigen Steuerung des Kochvorganges des Gargutes oder des Aufzeichnens der Wärmebehandlüng des Gargutes.

Es besteht zwar Bedarf an einer temperaturabhängige Steuerung des Kochvorganges des Gargutes, diese ist jedoch auf der Basis der Eichzahl eines Kochgeschirrs nicht möglich. Entsprechendes gilt für ein temperaturabhängiges Steuern des Tiefkühlens.

Eine temperaturabhängige Steuerung des Gargutes gibt es bereits bei einem aus der DE 44 10 263 A1 bekannten Kochsystem mit Kochgeschirr, bei dem in dem Boden des Kochgeschirrs, der als relative dicke Sandwichkonstruktion ausgeführt ist, eine Bohrung vorgesehen ist, die einen Temperaturfühler aufnimmt. Ein solcher Temperaturfühler ist bei einem induktionsfähigen Kochgeschirr der oben genannten Art nicht einsetzbar, weil dessen Wandstärke zu gering ist.

Aus dem Dokument DE 20 2004 009 968 U1 ist ein Gefäß zum Garen von Lebensmitteln bekannt, das einen Gefäßkörper, einen Gefäßboden und eine Gefäßwand umfasst, an dessen Außenseite ein Griffelement angeordnet ist, das eine Einrichtung zur Temperaturanzeige aufweist, die über eine Signalleitung mit einem Temperaturfühler verbunden ist, welcher in einer Ausnehmung angeordnet ist, die im Übergangsbereich zwischen dem Gefäßboden und der Gefäßwand sich parallel zu dem Gefäßboden erstreckt. Bei diesem bekannten Gefäß wird allein die Temperatur gemessen und angezeigt. Eine Steuerung der Temperatur des Garguts in dem Behälter oder das Aufzeichnen der Temperatur, um die Historie der Behandlung des Behälterinhalts festzuhalten, sind dabei nicht möglich. Darüber hinaus wird bei dem bekannten Gefäß die Temperatur nur am äußeren Umfang des Gefäßbodens gemessen, womit sich die Temperatur des Garguts auf dem Gefäßboden selbst nur mittelbar und daher ungenau ermitteln lässt.

GN-Behälter bestehen üblicherweise aus Blech aus rostfreiem Stahl mit einer Dicke von typisch 0,6 mm. Diese Blechbehälter sind häufig verzogen und eignen sich daher schlecht zur Zubereitung von Speisen. Sie werden bislang hauptsächlich zum Warmhalten und Kühlen von Speisen eingesetzt, nicht zum Kochen. Bei Herstellung eines GN-Behälters aus induktionsfähigem Material könnte der Behälter wie ein induktionsfähiges Kochgeschirr der oben genannten Art vor dem ersten Einsatz geeicht werden. Der Behälter aus induktionsfähigem Material würde mit der Eichzahl entsprechend markiert werden. Eine temperaturabhängige Steuerung des Kochvorganges wäre aber auch in diesem Fall nicht wie bei dem bekannten Kochsystem möglich, weil der GN-Behälter aus induktionsfähigem Material keinen Kochgeschirrboden aufweisen würde, der dick genug wäre, um eine Bohrung für einen Temperaturfühler aufnehmen zu können.

Aufgabe der Erfindung ist es, einen GN-Behälter zum temperaturabhängig steuerbaren Kochen und Tiefkühlen auszubilden.

Diese Aufgabe wird erfindungsgemäß dadurch gelöst, dass der Behälter in seiner Gesamtheit aus einem Mehrschichtmaterial aus mehreren aufeinander befestigten Schichten besteht, dass wenigstens eine Sende- und/oder Empfangseinrichtung, wenigstens für Temperaturinformation, in das Mehrschichtmaterial integriert ist und dass die Sende- und/oder Empfangseinrichtung wenigstens einen Transponder, insbesondere einen RFID-Transponder umfasst.

Die Erfindung beruht auf der überraschenden Erkenntnis, dass aufgrund der Tatsache, dass in Mehrschichtmaterial die Temperatur sehr ausgeglichen ist, praktisch an beliebiger Stelle des GN-Behälters die Temperatur erfasst und die so gewonnene Temperaturinformation zur Steuerung eingesetzt werden kann. Der GN-Behälter nach der Erfindung benötigt daher keinen in relativ dicker Sandwichkonstruktion ausgeführten Boden mit einer Bohrung zur Aufnahme eines Temperaturfühlers. Letzterer kann vielmehr in Zuordnung zu oder als Teil von einer Sende- und/oder Empfangseinrichtung, wenigstens für Temperaturinformation, an einer beliebigen Stelle des GN-Behälters in dessen Mehrschichtmaterial integriert werden. Da bei dem GN-Behälter nach der Erfindung die Sende- und/oder Empfangseinrichtung wenigstens einen Transponder, insbesondere einen RFID-Transponder umfasst, lässt sich auf vorteilhafte Weise bei dem GN-Behälter nach der Erfindung die Radio-Frequenz-Technologie anwenden, die mit winzigen Funk-Chips arbeitet. Basis dieser Technologie sind ein Lesegerät (etwa ein mobiler Scanner) und ein Transponder, der aus einem Chip und einer Antenne besteht. Die Antenne sorgt dafür, dass Informationen des Chips berührungslos und aus einigen Metern Entfernung abgelesen und Informationen auf den Chip geschrieben werden können. Der erfindungsgemäße GN-Behälter aus Mehrschichtmaterial mit zugeordnetem Transponder, insbesondere RFID-Transponder ist ein intelligenter Behälter, der ein temperaturabhängiges Kochen ermöglicht, statt, wie bislang üblich, lediglich das Warmhalten oder Kühlen. Zusätzlich dabei kann in der Sende- und Empfangseinrichtung auch die Historie der Behandlung des Behälterinhalts aufgezeichnet werden, so dass diese bei Bedarf wieder abgefragt werden kann. Darüber hinaus ist bei dem GN-Behälter nach der Erfindung die Temperatur nur einer von vielen Parametern, die erfasst, aufgezeichnet und/oder zur Steuerung eingesetzt werden können. So lässt sich z.B. auch ein Temperaturgradient, der bei der Wärme- oder Kältebehandlung des Behälterinhalts auftritt, festhalten und/oder beeinflussen.

Ein Kochvorgang lässt sich bei Verwendung des GN-Behälters nach der Erfindung temperaturabhängig punktgenau steuern, weil die Temperatur im Bereich von dessen gesamter Fläche an einer bequem zugänglichen Stelle erfassbar ist, zum Beispiel am Rand des GN-Behälters.

Vorteilhafte Ausgestaltungen der Erfindung bilden die Gegenstände der Unteransprüche.

Wenn in einer Ausgestaltung des GN-Behälters nach der Erfindung das Mehrschichtmaterial eine Zwischenschicht aus gut wärmeleitfähigem Material wie Aluminium, Kupfer oder Stahl zwischen zwei Deckschichten aus nicht rostendem Stahl wie ferritischem Stahl oder auf der dem wärmeleitfähigem Material benachbarten Seite mit Ferrit überzogenem Stahl aufweist, wobei ein Temperatursensor, welcher auch Teil der Sende- und/oder Empfangseinrichtung sein kann, in die Zwischenschicht integriert ist, lässt sich ein Kochvorgang besonders genau temperaturabhängig steuern, weil die Zwischenschicht die zuverlässigste Temperaturinformation liefern wird.

Wenn in einer weiteren Ausgestaltung des GN-Behälters nach der Erfindung der Temperatursensor und die Sende- und/oder Empfangseinrichtung und dieser gegebenenfalls zugeordnete Elemente räumlich und/oder thermisch voneinander getrennt sind, lässt sich damit dem Problem begegnen, das durch hohe Temperaturen hervorgerufen werden kann. Zweckmäßig wird nur der Temperatursensor hohen Temperaturen ausgesetzt, da dieser dafür ohnehin geschaffen ist, wohingegen alle übrigen Elemente einschließlich der Sende- und/oder Empfangseinrichtung an einer Stelle untergebracht werden, wo keine so hohen Temperaturen auftreten.

Wenn in einer weiteren Ausgestaltung des GN-Behälters nach der Erfindung der Temperatursensor und die Sende- und/oder Empfangseinrichtung und dieser gegebenenfalls zugeordnete Elemente in eine Art Befestigungselement integriert sind, das in eine von außen zugängliche Öffnung eingeführt ist, die sich bis in die Zwischenschicht erstreckt, so ist der GN-Behälter auf einfache Weise mit einer solchen Einrichtung aus- oder nachrüstbar.

Wenn in einer weiteren Ausgestaltung des GN-Behälters nach der Erfindung der Transponder Eichdaten des GN-Behälters und/oder Prozessparameter des Behälterinhalts enthält, kann die übliche Steuerung eines Induktionsherdes, die auf der Basis der erfassten Eichdaten von Kochgeschirren basiert, eingesetzt werden bzw. kann die Historie des Behälterinhalts abgefragt und bei Bedarf berücksichtigt werden, zum Beispiel auch bei der Steuerung.

Wenn in einer weiteren Ausgestaltung des GN-Behälters nach der Erfindung die Sende- und/oder Empfangseinrichtung einen Schwingkreis mit temperaturabhängiger Eigenfrequenz aufweist, bildet die Sende- und/oder Empfangseinrichtung selbst den Temperaturfühler, der die verlangte Temperaturinformation zur temperaturabhängigen Steuerung eines Kochvorganges liefert.

Ausführungsbeispiele der Erfindung werden im Folgenden unter Bezugnahme auf die Zeichnung näher beschrieben. Es zeigt
- Fig. 1: ein Querschnittansicht eines GN-Behälters mit einem in dessen Boden integrierten Transponder;
- Fig. 2: eine vergrößerte Einzelheit II des GN-Behälters nach Fig. 1 und
- Fig. 3: eine vergrößerte Teilquerschnittansicht eines GN-Behälters mit einem in dessen Boden separat angeordneten Temperatursensor.

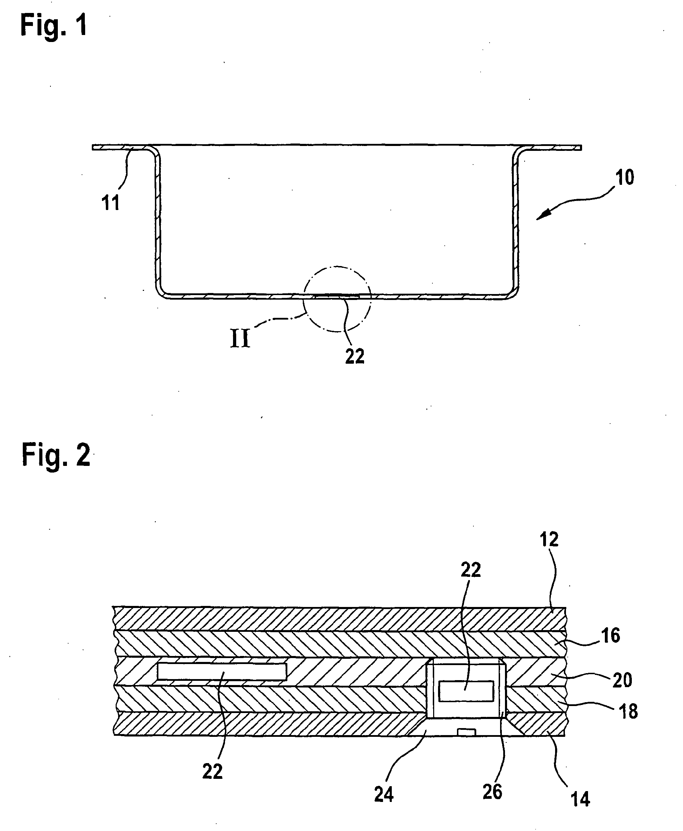

Fig. 1 zeigt im Querschnitt einen insgesamt mit 10 bezeichneten GN (Gastronorm)-Behälter.

Normale GN-Behälter, die hauptsächlich zum Warmhalten, Kühlhalten oder allgemein zum Aufbewahren von Speisen eingesetzt werden, insbesondere in Warm- bzw. Kaltausgaben, bestehen üblicherweise aus nichtrostendem Stahl. Einzelheiten zu solchen GN-Behältern und Warmausgaben finden sich beispielsweise in der EP 0 635 225 B1 und in DIN 66075. Ein GN-Behälter wird üblicherweise durch Tiefziehen aus einem Blech aus nichtrostendem Stahl hergestellt.

Der erfindungsgemäße GN-Behälter 10 wird ebenfalls durch Tiefziehen hergestellt, allerdings aus einem Mehrschichtmaterial aus mehreren aufeinander befestigten Schichten. Fig. 2 zeigt als eine Einzelheit II des GN-Behälters 10 nach Fig. 1 dessen Aufbau aus Mehrschichtmaterial. In dem dargestellten Ausführungsbeispiel hat das Mehrschichtmaterial zwei äußere Schichten 12 und 14 aus nicht rostendem Stahl, daran anschließend zwei Schichten 16 bzw. 18 aus Ferrit und innen eine Zwischenschicht 20 aus gut wärmeleitfähigem Material wie Aluminium, Kupfer oder Stahl. Die Zwischenschicht hat somit zwei Deckschichten 12, 16 bzw. 14, 18. Eine Sende- und/oder Empfangseinrichtung, wenigstens für Temperaturinformation, die insgesamt mit 22 bezeichnet ist, ist in das Mehrschichtmaterial integriert. Dafür sind in Fig. 2 zwei Alternativen gezeigt. In Fig. 2 links ist die Sende- und/oder Empfangseinrichtung 22 ein in die Zwischenschicht 20 integrierter Transponder. Bei der in Fig. 2 rechts dargestellten Alternative handelt es sich ebenfalls um einen Transponder, der aber, gegebenenfalls mit zugeordneten Elementen, in eine Art Befestigungselement 24 integriert ist, das in eine von außen zugängliche Öffnung 26 in dem Mehrschichtmaterial eingeführt ist, die sich bis in die Zwischenschicht 20 erstreckt. In dem dargestellten Ausführungsbeispiel hat das Befestigungselement ein Außengewinde, mit dem es in ein Innengewinde der Öffnung 26 eingeschraubt ist.

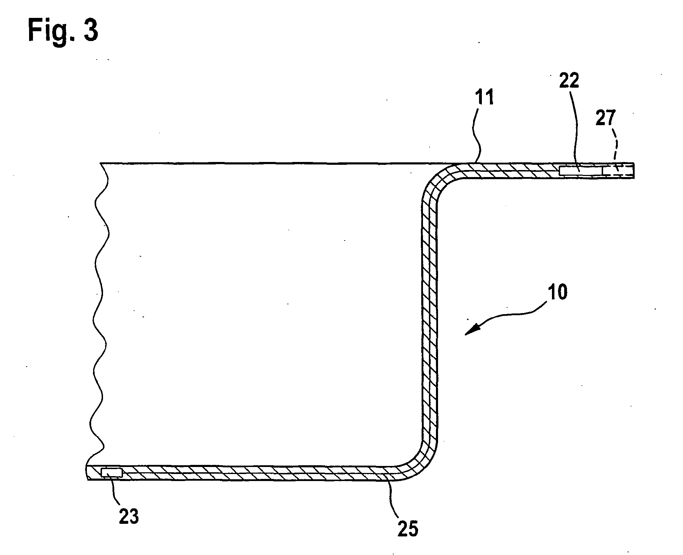

Der Transponder 22 ist vorzugsweise ein RFID-Transponder, der selbst als Temperaturfühler ausgebildet ist oder dem ein Temperaturfühler 23 (gezeigt in Fig. 3) zugeordnet ist. Der Aufbau eines solchen RFID-Transponders ist an sich bekannt und braucht hier nicht näher erläutert zu werden. Eingangs ist bereits erwähnt worden, dass ein solcher Transponder aus einem Chip und einer Antenne besteht. Über die Antenne sendet der Transponder bei Abfrage wenigstens eine Temperaturinformation. Zusätzlich oder stattdessen kann er über die Antenne Eichdaten des GN-Behälters empfangen und bei Abfrage senden. In einer zweckmäßigen Ausführungsform, bei welcher der Temperaturfühler Teil der Sende- und/oder Empfangseinrichtung 22 ist wie in Fig. 1, kann die Sende- und/oder Empfangseinrichtung einen Schwingkreis mit temperaturabhängiger Eigenfrequenz aufweisen (nicht dargestellt).

Der Transponder ist zwar in den Fig. 1 und 2 in den Boden des GN-Behälters 10 integriert dargestellt, er kann jedoch stattdessen in den Rand 11 des GN-Behälters 10 integriert sein wie bei dem im Folgenden beschriebenen Ausführungsbeispiel, das in Fig. 3 gezeigt ist. Da das Mehrschichtmaterial die Möglichkeit bietet, an irgendeiner Stelle des GN-Behälters 10 repräsentativ für den gesamten GN-Behälter die Temperatur zu messen, kann der Transponder mit dem Temperaturfühler in den Rand 11 des GN-Behälters integriert werden. Eine noch genauere Messung ermöglicht aber die in Fig. 3 gezeigte Anordnung.

Fig. 3 zeigt eine vergrößerte Teilquerschnittansicht des GN-Behälters 10, in dessen Boden der oben bereits erwähnte Temperatursensor 23 separat von der Sende- und/oder Empfangseinrichtung 22 untergebracht ist. Der Temperatursensor 23 und die Sende- und/oder Empfangseinrichtung 22 und dieser gegebenenfalls zugeordnete Elemente (in Fig. 3 nicht dargestellt) sind durch eine Leitung 25 elektrisch miteinander verbunden, aber räumlich und/oder thermisch voneinander getrennt. Der Temperatursensor 23, der ohnehin für hohe Temperaturen ausgelegt ist, wird zweckmäßig im Boden oder in einem dem Boden benachbarten Wandbereich des Behälters 10 untergebracht. Die Sende- und/oder Empfangseinrichtung 22, die in der Wand des Behälters 10 in dessen Rand 11 in der Zwischenschicht 20 untergebracht ist, ist auf diese Weise nicht den hohen Temperaturen ausgesetzt und kann darüber hinaus über ein gestrichelt angedeutetes Fenster 27 in dem Rand 11 des GN-Behälters 10, das z.B. mit Keramik ausgefüllt ist und somit die Sende- und/oder Empfangseinrichtung nicht elektrisch abschirmt, auf einfachere Weise oder ungestörter Signale senden und/oder empfangen. Ein solches Fenster kann auch in Fig. 1 unterhalb der Sende- und/oder Empfangseinrichtung 22 vorgesehen sein. Die Ausführungsform nach Fig. 3 ist vorteilhaft, wenn die Sende- und/oder Empfangseinrichtung 22 und/oder dieser gegebenenfalls zugeordnete Elemente einen Chipaufbau auf Siliciumbasis haben. Gegenwärtig machen nämlich Si-Chips Schwierigkeiten bereits ab einer Temperatur von etwa 180°C.

Der Standard-GN-Behälter wird erfindungsgemäß durch den Einsatz von Mehrschichtmaterial mit integrierter Sende- und/oder Empfangseinrichtung, insbesondere für Temperaturinformation, zu einem intelligenten GN-Behälter mit wesentlich vielseitigeren Einsatzmöglichkeiten.

## Patentansprüche

1. GN (Gastronorm)-Behälter, der in seiner Gesamtheit aus einem Mehrschichtmaterial aus mehreren aufeinander befestigten Schichten (12, 14, 16, 18, 20) besteht,
wobei wenigstens eine Sende- und/oder Empfangseinrichtung (22) für wenigstens eine Temperaturinformation in das Mehrschichtmaterial integriert ist und
die Sende- und/oder Empfangseinrichtung (22) wenigstens einen Transponder, insbesondere einen RFID-Transponder umfasst.

2. GN-Behälter nach Anspruch 1, **dadurch gekennzeichnet, dass** das Mehrschichtmaterial eine Zwischenschicht (20) aus gut wärmeleitfähigem Material wie Aluminium, Kupfer oder Stahl zwischen zwei Deckschichten (12, 14, 16, 18, 20) aus nichtrostendem Stahl wie ferritischem Stahl oder auf der dem wärmeleitfähigen Material benachbarten Seite mit Ferrit überzogenem Stahl aufweist, wobei ein Temperatursensor, welcher auch Teil der Sende- und/oder Empfangseinrichtung (22) sein kann, in die Zwischenschicht (20) integriert ist.

3. GN-Behälter nach Anspruch 2, **dadurch gekennzeichnet, dass** der Temperatursensor (23) und die Sende- und/oder Empfangseinrichtung (22) und dieser gegebenenfalls zugeordnete Elemente räumlich und/oder thermisch von einander getrennt sind.

4. GN-Behälter nach Anspruch 2, **dadurch gekennzeichnet, dass** der Temperatursensor (23) und die Sende- und/oder Empfangseinrichtung (22) und dieser gegebenenfalls zugeordnete Elemente in eine Art Befestigungselement (24) integriert sind, das in eine von außen zugängliche Öffnung (26) eingeführt ist, die sich bis in die Zwischenschicht (20) erstreckt.

5. GN-Behälter nach einem der vorhergehenden Ansprüche, **dadurch gekennzeichnet, dass** der Transponder Eichdaten und/oder Prozessparameter des GN-Behälters (10) enthält.

6. GN-Behälter nach einem der vorhergehenden Ansprüche, **dadurch gekennzeichnet, dass** die Sende- und/oder Empfangseinrichtung (22) einen Schwingkreis mit temperaturabhängiger Eigenfrequenz aufweist.

## Claims

1. A GN (Gastronorm or -standard) container comprised in its entirety of a multilayer material having several layers (12, 14, 16, 18, 20) fastened one upon the other,
wherein at least one transmitter and/or receiver device (22) for at least one temperature information is integrated in the multilayer material, and the transmitter and/or receiver device (22) comprises at least one transponder, in particular an RFID transponder.

2. The GN container according to claim 1, **characterized in that** the multilayer material includes an intermediate layer (20) made of a highly thermally conductive material, such as aluminum, copper or steel, between two cover layers (12, 14, 16, 18, 20) made of stainless steel such as ferritic steel or, on the side adjacent to the thermally conductive material, steel covered with ferrite, with a temperature sensor, which may also be part of the transmitter and/or receiver device (22), being integrated in the intermediate layer (20).

3. The GN container according to claim 2, **characterized in that** the temperature sensor (23) and the transmitter and/or receiver device (22) and any associated elements are isolated from each other spatially and/or thermally.

4. The GN container according to claim 2, **characterized in that** the temperature sensor (23) and the transmitter and/or receiver device (22) and any associated elements are integrated in a kind of fastening element (24) which is inserted into an opening (26) that is accessible from outside and extends into the intermediate layer (20).

5. The GN container according to any one of the preceding claims, **characterized in that** the transponder contains calibration data and/or process parameters of the GN container (10).

6. The GN container according to any one of the preceding claims, **characterized in that** the transmitter and/or receiver device (22) includes a resonant circuit with a temperature-dependent natural frequency.

## Revendications

1. Récipient GN (Gastronorm) qui se compose globalement d'un matériau multicouche composé de plusieurs couches (12, 14, 16, 18, 20) fixées les unes aux autres,
dans lequel au moins un dispositif d'émission et/ou de réception (22) pour au moins une information de température est intégré dans le matériau multicouche, et
le dispositif d'émission et/ou de réception (22) comprend au moins un transpondeur, en particulier un transpondeur RFID.

2. Récipient GN selon la revendication 1, **caractérisé en ce que** le matériau multicouche présente une couche intermédiaire (20) d'un matériau bon thermoconducteur, comme l'aluminium, le cuivre ou l'acier, entre deux couches de couverture (12, 14, 16, 18, 20) en acier inoxydable, comme l'acier ferritique ou un acier recouvert de ferrite du côté adjacent au matériau thermoconducteur, un capteur de température qui peut également faire partie du dispositif d'émission et/ou de réception (22) étant intégré dans la couche intermédiaire (20).

3. Récipient GN selon la revendication 2, **caractérisé en ce que** le capteur de température (23) et le dispositif d'émission et/ou de réception (22), ainsi que des éléments éventuellement associés à celui-ci, sont séparés les uns des autres de façon physique et/ou thermique.

4. Récipient GN selon la revendication 2, **caractérisé en ce que** le capteur de température (23) et le dispositif d'émission et/ou de réception (22) et des éléments qui sont éventuellement associés à celui-ci sont intégrés dans une sorte d'élément de fixation (24) qui est introduit dans une ouverture (26) accessible depuis l'extérieur et qui s'étend jusque dans la couche intermédiaire (20).

5. Récipient GN selon l'une quelconque des revendications précédentes, **caractérisé en ce que** le transpondeur contient des données d'étalonnage et/ou des paramètres de processus du récipient GN (10).

6. Récipient GN selon l'une quelconque des revendications précédentes, **caractérisé en ce que** le dispositif d'émission et/ou de réception (22) présente un circuit oscillant avec une fréquence propre dépendant de la température.
